(19) Europäisches Patentamt
European Patent Office
Office européen des brevets

(11) Veröffentlichungsnummer: **0 011 702 B1**

(12) **EUROPÄISCHE PATENTSCHRIFT**

(45) Veröffentlichungstag der Patentschrift: **27.10.82**

(51) Int. Cl.³: **C 08 G 18/76,** C 08 G 18/72

(21) Anmeldenummer: **79103970.4**

(22) Anmeldetag: **15.10.79**

(54) **Dispersionen von Destillationsrückständen der TDI-Herstellung in Polyolen und deren Verwendung in einem Verfahren zur Herstellung von Polyurethankunststoffen.**

(30) Priorität: **27.10.78 DE 2846814**

(43) Veröffentlichungstag der Anmeldung: **11.06.80 Patentblatt 80/12**

(45) Bekanntmachung des Hinweises auf die Patenterteilung: **27.10.82 Patentblatt 82/43**

(84) Benannte Vertragsstaaten: **BE DE FR GB IT**

(56) Entgegenhaltungen:
**DE-A-2 123 183**
**DE-B-1 168 075**
**US-A-3 180 852**

(73) Patentinhaber: **BAYER AG, Zentralbereich Patente, Marken und Lizenzen, D-5090 Leverkusen 1, Bayerwerk (DE)**

(72) Erfinder: **Reischl, Artur, Dr., H.T. von Böttinger Strasse 19, D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

# Dispersionen von Destillationsrückständen der TDI-Herstellung in Polyolen und deren Verwendung in einem Verfahren zur Herstellung von Polyurethankunststoffen

Die Erfindung betrifft stabile Dispersionen von im wesentlichen monomerenfreien, unlöslichen, nicht unzersetzt schmelzbaren, wassermodifizierten, feinpulverisierten Toluylendiisocyanat-Destillationsrückständen mit einem includierten NCO-Gehalt unter 15 Gew.-% in Polyhydroxylverbindungen, ein Verfahren zur Herstellung dieser Dispersionen sowie die Verwendung der Dispersionen als Polyolkomponente bei der Herstellung von gegebenenfalls verschäumten Polyurethankunststoffen.

Bei der großtechnischen Produktion von Isocyanaten entstehen zwangsläufig immer erhebliche Mengen an höhermolekularen, vernetzten Neben- und Folgeprodukten. Diese Nebenprodukte fallen während der destillativen Aufarbeitung der durch Phosgenierung von Aminen erhaltenen rohen Isocyanatlösungen als nicht-destillierbarer Rückstand an.

Diese Rückstände sind für den üblichen Verwendungszweck von Isocyanaten (Herstellung von Polyurethankunststoffen) unbrauchbar. Um einen totalen Verlust des nicht-destillierbaren Rückstandes zu vermeiden, kann man sich in manchen Fällen, beispielsweise bei der Phosgenierung von Diaminen der Diphenylmethanreihe, so behelfen, daß man nur einen Teil des reinen monomeren Isocyanats aus dem rohen Phosgenierungsprodukt isoliert, d. h. einen beträchtlichen Anteil an monomerem Isocyanat in der Sumpfphase beläßt, um die höhermolekularen Neben- und Folgeprodukte in Lösung zu halten. Für das so erhaltene, flüssige, an höhermolekularen Produkten angereicherte Polyisocyanatgemisch (sogenanntes »rohes MDI«) konnte im Laufe der letzten Jahre eine Reihe von Anwendungsmöglichkeiten für spezielle Kunststoffe gefunden werden.

Alle Versuche, in analoger Weise an höhermolekularen Folgeprodukten angereichertes Toluylendiisocyanat (»rohes TDI«) mit einem ökonomisch noch vertretbar niedrigen Anteile an monomerem Toluylendiisocyanat anzuwenden, scheiterten bisher jedoch. Unter den technisch realisierbaren Bedingungen fallen bei der Destillation des Phosgenierungsprodukts von Toluylendiaminen immer höhermolekulare, unlösliche Folgeprodukte um Uretdion-, Isocyanurat-, Carbodiimid-, Uretonimin-, Harnstoff- und Biuretgruppen an. Je nach Gehalt des Ausgangsprodukts an o-Toluylendiamin entstehen bei der Phosgenierung außerdem Methyl-benzimidazolone, die im Laufe der Zeit mit den vorhandenen freien Isocyanatgruppen unter Molekülvergrößerung zu unlöslichen, vernetzten Produkten biuretisiert werden. Rohe TDI-Destillationsrückstände, die noch einen hohen Monomerengehalt (möglichst über 80 Gew.-%) aufweisen und praktisch kein Methyl-benzimidazolon oder dessen Derivate enthalten, sind zwar löslich aber nicht ausreichend lagerstabil; der Gehalt an freien NCO-Gruppen nimmt auch bei Raumtemperatur während der Lagerung unter Viskositätserhöhung ab.

In der US-PS 31 80 852 (DE-AS 10 89 160) wird ein Verfahren beschrieben, wo Polyole mit einem gemahlenen Isocyanatdestillationsrückstand und gegebenenfalls weiteren Zusätzen wie Holzmehl oberhalb 150° unter Bildung von Polyurethankunststoffen umgesetzt werden. Diese Destillationsrückstände enthalten 20—60% NCO und lassen sich in dieser Form zwar zerkleinern, aber nicht fein mahlen, da dann Verbackungen eintreten.

Es wurden auch zahlreiche Verfahren vorgeschlagen (US-PS 3 634 361; DE-OS 2 123 183; DE-OS 2 333 150; US-PS 3 634 361; DE-OS 2 423 594), TDI-Destillationsrückstände, die noch einen beträchtlichen Gehalt an freien NCO-Gruppen (bevorzugt über 20 Gew.-%) aufweisen, in Anwesenheit von monomeren Diisocyanaten in einem organischen Lösungsmittel, gegebenenfalls bei hohen Temperaturen, zu lösen und diese Rückstandslösungen in üblicher Weise für das Polyisocyanatpolyadditionsverfahren einzusetzen. In der Praxis scheiterte diese Verwertung der TDI-Rückstände jedoch an der mangelnden Lagerstabilität und Standardisierbarkeit (falls eine Auflösung überhaupt möglich war) oder an der Sedimentation unlöslicher Bestandteile.

Eine partielle TDI-Destillationsrückstandsverwertung gelang in letzter Zeit durch alkalische Hydrolyse der TDI-Destillationsrückstände. Es wird dabei allerdings nur ein relativ kleiner Anteil an Toluylendiaminen zurückgewonnen.

Mehr Erfolg, die TDI-Ausbeute zu maximieren, brachten die inzwischen im großem Umfang bei der technischen Produktion von Toluylendiisocyanat angewandten sogenannten Fallrohrverdampfer (DE-OS 2 035 731) bzw. die kontinuierliche Thermolyse des noch flüssigen TDI-Rückstandsteers. Dabei fallen praktisch monomerenfreie, jedoch noch freie Isocyanatgruppen enthaltende Rückstände an, die zwecks Vermeidung von leicht auftretenden Schwelbränden und auch aus physiologischen Gründen unmittelbar im Anschluß an die Abtrennung des reinen, monomeren TDI in hoch erhitztem Zustand (bei ca. 150 bis 300° C) als teerartige Masse in Wasser eingerührt werden. Bei diesem Denaturierungsprozeß reagieren die noch vorhandenen freien Isocyanatgruppen zu einem erheblichen Teil mit dem Wasser unter Kohlendioxydentwicklung und Ausbildung von zusätzlichen Polyharnstoffgruppen, so daß nur noch ein sehr geringer Rest von ca. 1 bis 10 Gew.-% an inkludierten Isocyanatgruppen übrig bleibt. Beim Lagern in Wasser oder in feuchtem Zustand nimmt der Isocyanatgehalt über längere Zeit allmählich weiter ab.

Die so erhaltenen, schlackenartigen, u. a. Polyharnstoff-Isocyanurat- und Polycarbodiimidgruppen aufweisenden TDI-Rückstände sind in allen gebräuchlichen Lösungsmitteln praktisch unlöslich. Erst oberhalb von ca. 230 bis 280° C beginnen sie, wenn überhaupt, teilweise zu schmelzen, wobei

Zersetzung und Gasentwicklung auftritt.

Der weitaus größte Teil der bei der TDI-Produktion zwangsweise anfallenden riesigen Mengen an Destillationsrückständen (10 Gew.-% der Theorie) wird auf Deponien abgelagert oder mit erheblichen Problemen in Heizwerken verbrannt. Bei der Verbrennung der TDI-Rückstandsschlacken bilden sich am Boden des Verbrennungsraums Ablagerungen von fest haftenden, schwer entflammbaren Teermassen, die sich in vielen Fällen oberhalb von ca. 500°C explosionsartig zersetzen.

Es war deshalb die Aufgabe der vorliegenden Erfindung, die Destillationsrückstände der TDI-Herstellung (Kurzbezeichnung: »TDI-Destillationsrückstände«) in Form der mit Hilfe von Wasser denaturierten TDI-Rückstandsschlacken, die in der weitaus größten Menge bei der Produktion von 2,4-/2,6-Toluylendiisocyanat im Isomerenverhältnis 80 : 20 anfallen und sogar bei Zersetzungstemperaturen über 280°C nicht schmelzen, technisch brauchbare Verwertungsmöglichkeiten im Sinne eines Recycling zu erschließen. Überraschenderweise wurde nun gefunden, daß sich diese TDI-Destillationsrückstände durch sehr feines Vermahlen (»TDI-Rückstandspulver«) und gegebenenfalls anschließende einfache chemische Modifizierungsreaktione in heterodisperser Phase in hochwertige, reaktive Füllstoffe überführen lassen. Diese Füllstoffe werden erfindungsgemäß in Form sedimentationsstabiler Dispersionen in Polyhydroxylverbindungen als Polyolkomponente im Polyisocyanat-Polyadditionsverfahren zur Herstellung von Polyurethankunststoffen eingesetzt.

Gegenstand der Erfindung sind somit Dispersionen von Destillationsrückständen der TDI-Herstellung, gekennzeichnet durch einen Gehalt von

A) 2 bis 60 Gew.-% vorzugsweise 5 bis 50 Gew.-%, besonders bevorzugt 10 bis 40 Gew.-%, bezogen auf gesamte Dispersion, eines im wesentlichen monomerenfreien, vernetzten, in inerten organischen Lösungsmitteln unlöslichen, nicht unzersetzt schmelzbaren, wassermodifizierten Destillationsrückstandes der Toluylendiisocyanatherstellung mit einem Gehalt von weniger als 15 Gew.-% includierter NCO-Gruppen, in feingemahlener Form mit einer mittleren Teilchengröße von weniger als 350 um, 350 µm, bevorzugt weniger als 25 µm, insbesondere weniger als 15 µm, besonders bevorzugt weniger als 5 µm und dessen freie Isocyanatgruppen gegenenfalls durch Umsetzung mit Verbindungen mit aciden Wasserstoffatomen ganz oder teilweise abreagiert wurden, als disperse Phase in

B) Verbindungen mit mindestens 2, vorzugsweise 2 bis 6, besonders bevorzugt 2 bis 4, aliphatischen Hydroxylgruppen und einem mittleren Molekulargewicht von 400 gis 10 000, vorzugsweise 600 bis 3000, als kohärenter Phase

Die erfindungsgemäß sehr feinteilig und stabil in höhermolekularen, mehrwertigen Alkoholen dispergierten Rückstandsschlacken fallen, wie oben im Zusammenhang mit der erfindungsgemäßen Problemstellung eingehend beschrieben, bei den derzeit üblichen großtechnischen Produktionsverfahren für 2,4- und/oder 2,6-Toluylendiisocyanat nach der praktisch vollständigen Isolierung des monomeren Diisocyanats aus dem rohen Phosgenierungsprodukt in einer Menge von meist mehr als 10 Gew.-%, bezogen auf die theoretische Ausbeute an monomerem Diisocyanat, an. Nach dem Abkühlen des heißen, teerartigen Rückstands durch Einbringen in Wasser, erhält man eine praktisch monomerenfreie, grobteilige, unregelmäßig geformte, unlösliche Schlacke, welche weniger als 15 Gew.-%, im allgemeinen sogar weniger als 10 Gew.-%, an freien Isocyanatgruppen inkludiert enthält. Daneben weisen die TDI-Destillationsrückstandsschlacken in unterschiedlichen Mengenverhältnissen Harnstoff-, Biuret-, Uretdion-, Isocyanurat-, Carbodiimid-, Uretonimin- und gegebenenfalls auch Methyl-benzimidazolongruppen sowie deren Biuretisierungsprodukte auf. Die Schlacken sind in ihrer Molekularstruktur über diese verschiedenen funktionellen Gruppen so hoch vernetzt, daß sie selbst nach dem Zerkleinern auf eine mittlere Teilchengröße von ca. 5 µm in inerten organischen Lösungsmitteln wie Methylenchlorid, Cyclohexan, Cyclohexanon, Toluol, Xylol oder Dichlorbenzol auch bei Siedetemperatur praktisch unlöslich sind. Auch von siedendem Dimethylformamid werden die Schlackenteilchen nur teilweise angequollen, jedoch nicht aufgelöst. Wenn überhapt, erweicht nur ein sehr geringer Anteil des erfindungsgemäß eingesetzten TDI-Destillationsrückstandes oberhalb ca. 230—280°C, jedoch tritt oberhalb 280°C Zersetzung unter Gasentwicklung ein, ohne daß die Destillationsrückstände schmelzen.

Vor der Herstellung der erfindungsgemäßen Dispersionen in Polyhydroxylverbindungen müssen die grobkörnigen TDI-Rückstandsschlacken zerkleinert werden. Vorteilhafterweise erfolgt dabei zunächst eine Vorverkleinerung auf eine Teilchengröße unter ca. 2 mm, wonach man die Schlacke gegebenenfalls (bevorzugt unter 50°C) wenn man die freien NCO-Gruppen erhalten will, beispielsweise in einem Umluftschrank, trocknet, bis der Wassergehalt unter 5 Gew.-%, besonders bevorzugt unter 2 Gew.-%, gesunken ist. Danach wird die Schlacke in üblichen Mahlmaschinen weiter zerkleinert. Ökonomisch besonders günstig ist die mechanische Zertrümmerung der granulierten, weitgehend trockenen TDI-Rückstandsschlacke in Substanz mit Hilfe von Dampf- oder Luftstrahlmühlen, da mit diesen Geräten in einem Durchgang bei hohem Durchsatz mittlere Teilchengrößen von weniger als 10 µm ohne weiteres erreicht werden können. Selbstverständlich können aber auch Luftstrommühlen, wie Schlagkranz-, Zahnkranz- oder Turbomühlen gegebenenfalls mehrstufig hintereinander geschaltet, für die Feinzerkleinerung benutzt werden, ferner die an sich bekannten

Stift- oder Kugelmühlen — wenn auch unter Inkaufnahme einer längeren Vermahlungszeit. Überraschend gut geeignet für die weitere Zerkleinerung sind auch die im Handel in allen Labor- und Produktionsgrößen erhältlichen Mischapparaturen, wenn sie z. B. mit pflugscharähnlichen Mischelementen und (bevorzugt mehrstufigen) Messerköpfen ausgerüstet sind. Diese Mischapparaturen können gleichzeitig als Reaktor dienen. Gegebenenfalls kann die Feinvermahlung der Schlacke auch schon in Gegenwart des OH-funktionellen Suspensionsmittels oder eines inerten organischen Mediums nach einem Naßzerkleinerungsverfahren vorgenommen werden.

Hierfür eignen sich besonders Zahnkolloid-, Trigonalzahnring-, Korundscheiben- und Rührwerkskugelmühlen, evtl. in hintereinander geschalter Kombination.

Der Vorteil des Trockenmahlens liegt jedoch darin, daß man ein Standard-Pulver erhält, welches dann den verschiedensten als Suspensionsmittel dienenden Polyolen beigemischt werden kann.

Durch das Vermahlen der TDI-Destillationsrückstandsschlacke werden die oben erwähnten, inkludierten funktionellen Gruppen für chemische Umsetzungen zugänglich gemacht. Der pulverisierte Rückstand kann daher vor, während oder nach der Dispergierung in den höhermolekularen Polyhydroxylverbindungen den verschiedensten chemischen Modifizierungsreaktionen unterworfen werden. Die Modifizierungsreaktionen vor der Suspendierung können sowohl aus der Gasphase als auch in einem inerten flüssigen Medium vorgenommen werden, wobei insbesondere die geringen Mengen an noch vorhandenen freien Isocyanatgruppen durch Umsetzung mit H-aciden Verbindungen abreagiert werden. So kann man z. B. den pulverisierten TDI-Rückstand in einem zylindrisch geformten Reaktionsgefäß — vorzugsweise nach dem Gegenstromprinzip — mit Ammoniak oder gasförmigen Aminen behandeln, wobei nach sehr kurzer Zeit (je nach Feinheit des Pulvers weniger als 1 Minute) die freien NCO-Gruppen reagiert haben, ohne daß eine mechanische Durchmischung erforderlich ist. Als Aminkomponente kommen alle leicht verdampfbaren primären und sekundären Mono- und Polyamine in Frage, beispielsweise Methylamin, Butylamin, Diäthylamin, Dibutylamin, Äthylendiamin, Propylendiamin, Äthanolamin, Diäthanolamin, Propanolamin etc. Bei dieser Modifizierungsreaktion entstehen zusätzliche Harnstoffgruppen im TDI-Rückstandspulver, die besonders leicht Kondensationsreaktionen mit Carbonylvernindungen wie beispielsweise Formaldehyd, Acetaldehyd, Butyraldehyd, Crotonaldehyd, Acrolein, insbesondere Formaldehyd, eingehen können. Gegebenenfalls kann man diese Carbonylverbindungen im Anschluß an die Modifizierung mit Ammoniak bzw. Aminen in Gasform durch das Pulver leiten.

Anstelle von Formaldehyd und Ammoniak kann selbstverständlich auch Urotropin unter hydrolysierenden Bedingungen zur Ausbildung von Methylenharnstoffbrücken eingesetzt werden.

Eine weitere Modifizierungsmöglichkeit ist die Reaktion mit Wasserdampf. Während die Umsetzung der freien Isocyanatgruppen des Rückstandspulvers mit Wasserdampf auch bei Verwendung von sehr fein gemahlener TDI-Rückstandsschlacke unterhalb von 100°C sehr langsam abläuft, kann man eine quantitative Polyharnstoffbildung innerhalb kurzer Zeit erreichen, wenn man Reaktionstemperaturen oberhalb des Siedepunkts von Wasser, bevorzugt oberhalb von 130°C, anwendet. Bei ausreichend zerkleinerten TDI-Rückstandsschlacke genügt es, diese mit Wasser zu benetzen und für einige Minuten den erwähnten Temperaturen auszusetzen. Danach enthält das Rückstandspulver praktisch keine freien NCO-Gruppen mehr.

Selbstverständlich ist es auch möglich, die NCO-Gruppen des Rückstandspulvers aus der Gasphase mit Alkoholen wie z. B. Methanol, Äthanol, Propanol oder Äthylenglykol oder mit Säuren wie z. B. Essigsäure umzusetzen.

Wie schon erwähnt, kann das TDI-Destillationsrückstands-Pulver auch dispergiert in Wasser oder einem organischen Lösungsmittel chemischen Modifizierungsreaktionen unterworfen werden. Von Interesse sind in diesem Zusammenhang insbesondere unter dem Einfluß von Katalysatoren ablaufende Reaktionen der freien Isocyanatgruppen mit sich selbst, beispielsweise die Bildung von Uretdiongruppen durch Einwirkung trisubstituierter Phosphine oder die Bildung weiterer Carbodiimidgruppen mittels Phospholinoxid. Selbstverständlich können auch alle oben erwähnten Modifizierungsreaktionen mit Ammoniak, Aminen, Aldehyden und Ketonen, Alkoholen sowie Mono- und Polycarbonsäuren an den in Wasser, im Polyol oder einem organischen Lösungsmittel dispergierten Rückstandspulvern vorgenommen werden. Es ist auch möglich, schwach saure Verbindungen (z. B. Bisulfit oder andere Isocyanatabspalter in an sich bekannter Weise an die freien Isocyanatgruppen zu addieren, welche dann bei höheren Temperaturen zu einem späteren Zeitpunkt unter Freisetzung der Isocyanatgruppen wieder abgespalten werden können. Auch Modifizierungsreaktionen an den Carbodiimidgruppen des TDI-Rückstandspulvers mit Aminen, Amiden, Phosphiten oder Carbonsäuren in analoger Weise, wie sie in den DE-Offenlegungsschriften 2 714 289, 2 714 292 und 2 714 293 beschrieben werden, sind erfindungsgemäß möglich. Die in Wasser oder Polyol oder in organischen Lösungsmitteln dispergierten pulverisierten TDI-Rückstandsschlacken können auch mit allen weiter unten im Zusammenhang mit der Herstellung von Polyurethankunststoffen genannten Kettenverlängerungsmitteln (z. B. Äthylenglykol, Diäthylenglykol, Propylenglykol und Dipropylenglykol) bzw. Kettenabbrechern zwecks Entfernung der freien Isocyanatgruppen behandelt werden.

Als organische Verbindungen, in denen die feinteiligen TDI-Rückstandspulver zwecks chemischer Modifizierung bis zu einem Feststoffgehalt von ca. 60 Gew.-% dispergiert werden, eignen sich die üblichen organischen Lösungsmittel mit einem Siedepunkt von vorzugsweise unter 150°C, besonders

bevorzugt unter 130°C, die jedoch, wie oben ausgeführt, für das Rückstandspulver praktisch Nichtlösungsmittel sind. Beispielhaft seinen Methylenchlorid, Aceton, Petroläther, Cyclohexan, Äthylacetat, Benzol, Toluol und Xylol genannt. Das inerte Suspensionsmittel kann nach erfolgter Modifizierungsreaktion durch Filtration und anschließende Trocknung oder durch Destillation entfernt werden. In vielen Fällen ist es ausreichend, nur so viel des Reaktionsmediums einzusetzen (ca. 10 Gew.-%, bezogen auf Rückstandspulver, und weniger), wie es für das Auflösen des vorgesehenen Reaktionspartners oder des Katalysators bzw. für deren gleichmäßige Verteilung im TDI-Rückstandspulver erforderlich ist. Wenn es aus irgendeinem Grund nötig erscheint, bei der Modifizierung des Rückstandspulvers Temperaturen anzuwenden, welche über dem Siedepunkt des verwendeten Reaktionsmediums liegen, so wird in einem Druckgefäß gearbeitet.

Selbstverständlich können alle diese Modifizierungsreaktionen auch schon simultan mit dem Vermahlen der Rückstandsschlacke (insbesondere wenn naß gemahlen wird) vorgenommen werden.

Die beschriebenen Modifizierungsreaktionen mit den vorzerkleinerten TDI-Rückstandsschlacken können in speziellen Fällen, bei denen pastöse Zwischenstufen auftreten, mit Vorteil auch in selbstreinigenden Schneckenmaschinen durchgeführt werden. Geeignete Extruder mit selbstreinigender Schneckengeometrie sind an sich bekannt und werden z. B. in »Schneckenmaschinen in der Verfahrenstechnik« von H. Hermann, Springer-Verlag, Berlin/Heidelberg/New York, 1972, S. 161—170, und insbesondere auch in den US-Patentschriften 3 963 679 und 3 993 641 beschrieben.

Die Durchführung von organisch-chemischen Reaktionen in Reaktionsschnecken ist zwar bekannt. Im allgemeinen bediente man sich jedoch der Reaktionsschnecken zur Herstellung und Modifizierung von Polymerschmelzen, wobei Temperaturen oberhalb der Erweichungspunkte der jeweiligen Produkte angewendet werden. Die Reaktionen des erfindungsgemäßen Verfahrens gehen hingegen immer von festem TDI-Rückstandspulver aus. Dannach werden gegebenenfalls verschiedene pastenartige Zustände durchlaufen, in denen in noch vorhandenen flüssigen Reaktionskomponenten die feste zerkleinerte TDI-Rückstandsschlacke suspendiert ist. In diesen Phasen neigt das Reaktionsgut besonders stark zum Verkleben und Verklumpen. Letztlich, nach weitgehender Umsetzung der zudosierten, bevorzugt niedermolekularen Reaktionskomponenten, wird ein hartes, granuliertes oder körniges Endprodukt erhalten. Es war nicht zu erwarten, daß mit den genannten Schneckenmaschinen chemische Reaktionen durchführbar sein würden, bei welchen die erfindungsgemäßen, nicht unzersetzt schmelzbaren TDI-Rückstände eingesetzt werden. Es war besonders überraschend, daß mittels derartiger Schneckenmaschinen die Modifizierungsreaktion in den in Wasser denaturierten, duromeren TDI-Rückständen im technischen Maßstab praktisch lösungsmittelfrei so gut unter Kontrolle gehalten werden können, daß direkt beliebig lange lagerstabile, preßbare Produkte erhalten werden. Insbesondere war es überraschend, daß beim Austritt aus der Schnecke bereits ein feines rieselfähiges Pulver anfällt, das ohne weitere Vermahlung für viele Einsatzgebiete verwendet werden kann.

Die erfindungsgemäßen Dispersionen werden durch Einrühren des wie eben beschrieben modifizierten TDI-Rückstandspulvers in die Polyhydroxylverbindung nach an sich bekannten Mischtechniken erhalten. Es ist dabei möglich, aber weniger bevorzugt, das Pulver zusammen mit dem bei der Modifizierungsreaktion verwendeten Reaktionsmedium (Wasser bzw. organisches Lösungsmittel) in die Polyhydroxylverbindung einzurühren und erst danach das flüchtige Suspensionsmittel destillativ zu entfernen.

Erfindungsgemäß bevorzugt ist es jedoch, das unmodifizierte, feingemahlene wassermodifizierte TDI-Rückstandspulver in der höhermolekularen Polyhydroxylverbindung zu dispergieren, und erst danach in situ den oben beschriebenen Modifizierungsreaktionen zu unterwerfen. Besonders bevorzugt läßt man dabei die freien Isocyanatgruppen des Rückstandspulvers mit den Hydroxylgruppen der höhermolekularen Polyhydroxylverbindung bei erhöhter Temperatur abreagieren. Es ist als äußerst überraschend anzusehen, daß auf diese Weise die NCO-Gruppen des feinverteilten TDI-Rückstands vollständig umgesetzt werden können, ohne daß Dispersionen mit unbrauchbar hohen Viskositäten entstehen, wie es nach der technischen Lehre der DE-Offenlegungsschriften 2 550 796 und 2 550 797 zu erwarten gewesen wäre. So erhält man beispielsweise bei der Umsetzung eines TDI-Rückstandspulvers mit einer mittleren Teilchengröße von 5 µm und einem NCO-Gehalt von ca. 10 Gew.-% mit einer solchen Menge eines trifunktionellen Polyäthers aus Äthylenoxid und Propylenoxid, daß äquivalente Mengen an freien NCO- und OH-Gruppen vorliegen, bei 130°C in einem einfachen Rührkessel eine lagerstabile, 40%ige Dispersion mit relativ niedriger Viskosität, die weder sedimentiert noch ihre Viskosität im Verlauf von 6 Monaten ändert. Setzt man hingegen unter sonst gleichen Bedingungen anstelle des TDI-Rückstandspulvers monomeres Toluylendiisocyanat in einer den OH-Gruppen des Polyäthers äquivalenten Menge ein, so entsteht innerhalb kurzer Zeit ein klebriges, elastisches Umsetzungsprodukt, das sich nicht rühren läßt. Es ist daher anzunehmen, daß im Falle des TDI-Rückstandspulvers die freien NCO-Gruppen unerwarteteterweise in erheblichem Umfang (größenordnungsmäßig ca. 80%) nicht mit den Hydroxylgruppen, sondern in anderer Weise abreagieren.

Wie schon erwähnt, ist es erfindungsgemäß bevorzugt, mindestenst einen Teil der freien Isocyanatgruppen der pulverisierten TDI-Rückstandsschlacke durch Reaktion mit den Hydroxylgruppen der höhermolekularen Polyhydroxylverbindung umzusetzen, weil dadurch eine besondere

Stabilisierung der erfindungsgemäßen Dispersionen gegenüber Sedimentation erzielt wird. Überraschenderweise bleiben bei so herhestellten Dispersionen auch Anteile des Rückstandspulvers mit relativ größerem Teilchendurchmesser (selbst bei niedriger Viskosität der Polyhydroxylverbindung) lagerstabil dispergiert. Eine ähnlich stabilisierende Wirkung erzielt man auch, wenn man, wie bereits angedeutet, die oben beschriebenen Modifizierungsreaktionen des TDI-Rückstandspulvers mit Ammoniak, aminofunktionellen Verbindungen, Alkoholen, Carbonylverbindungen etc. in situ in der höhermolekularen Polyhydroxylverbindung als Dispersionsmittel ablaufen läßt. Gegebenenfalls können auf diese Weise auch kationische und/oder anionische Gruppen bzw. zur Salzbildung befähigte Gruppen in das dispergierte Pulver eingebaut werden. Erfindungsgemäß geeignete Reaktionspartner für solche Modifizierungsreaktionen werden in den DE-Offenlegungsschriften 2 324 134, 2 423 984, 2 512 385, 2 513 815, 2 550 796, 2 550 797, 2 550 933, 2 550 862, 2 633 293 und 2 639 254 beschrieben. Vorteilhafterweise bedient man sich bei der in situ-Modifizierung der pulverisierten TDI-Rückstandsschlacke mit Ammoniak, aminofunktionellen Verbindungen, Alkoholen, Aminoplastbildnern und/oder Aldehyden der in den genannten Druckschriften beschriebenen Verfahrenstechniken. Es ist dabei als überraschend anzusehen, daß — im Gegensatz zur Lehre der DE-OS 2 550 796 — bei der diskontinuierlichen in situ-Herstellung der erfindungsgemäßen Suspensionen in Rührkesseln auch ohne Mitverwendung von Wasser relativ niedrigviskose Produkte erhalten werden.

In speziellen Fällen können die erfindungsgemäßen Dispersionen auch durch radikalische Polymerisationsreaktionen modifiziert werden. Hierfür eignen sich bevorzugt Dispersionen von TDI-Rückstandspulvern, in welchen die höhermolekulare Polyhydroxylverbindung und/oder das dispergierte Rückstandspulver copolymerisierbare Gruppen enthalten. Geeignete höhermolekulare Polyhydroxylverbindungen mit copolymerisierbaren Gruppen sind beispielsweise ungesättigte Polyester auf Basis von Maleinsäure. In die TDI-Rückstandspulver lassen sich ungesättigte, copolymerisierbare Gruppen auf einfache Weise mittels der oben beschriebenen Modifizierungsreaktionen einführen: so kann man beispielsweise die freien NCO-Gruppen des Rückstands mit einem ungesättigten Alkohol (z. B. Allylalkohol oder Hydroxylgruppen aufweisende Ester von Acrylsäure) oder einer ungesättigten Carbonsäure (z. B. Acrylsäure, Methacrylsäure, Maleinsäure, Fumarsäure) zur Reaktion bringen oder die Harnstoffgruppen des TDI-Rückstandspulvers mit ungesättigten Carbonylverbindungen (z. B. Acrolein oder Crotonaldehyd) umsetzen. Erfindungsgemäße Dispersionen dieser Art können durch radikalische Copolymerisation mit olefinisch ungesättigten Monomeren wie beispielsweise Acrylnitril, Styrol, Butadien, Neopren, Chloropren, Acrylsäureestern, Methacrylsäureestern, Vinylchlorid oder Vinylacetat unter Verwendung an sich bekannter Radikalinitiatoren modifiziert werden.

Alle geschilderten Modifizierungsreaktionen an den Dispersionen von TDI-Rückstandspulvern in höhermolekularen Polyhydroxylverbindungen (Polyadditionsreaktionen; Polykondensationsreaktionen mit Aldehyden und gegebenenfalls Aminoplastmonomeren; Polymerisationsreaktionen) können einzeln oder auch zusammen, nacheinander oder auch simultan ausgeführt werden. Im allgemeinen beschrankt man sich jedoch auf die besonders leicht durchführbaren Polyadditions- und Polykondensationsreaktionen, die, wie erwähnt, in beliebiger Reihenfolge ablaufen können. Erfindungsgemäß bevorzugt ist es, wie oben erläutert wurde, alle diese Modifizierungsreaktionen in situ in der höhermolekularen Polyhydroxylverbindung ablaufen zu lassen. Es ist jedoch erfindungsgemäß auch möglich, in den höhermolekularen Polyhydroxylverbindungen solche TDI-Rückstandspulver zu dispergieren, welche bereits diesen Modifizierungsreaktionen unterworfen wurden.

Als Dispersionsmittel für die gegebenenfalls modifizierten TDI-Rückstandspulver (Komponente B der erfindungsgemäßen Dispersionen) kommen Polyhydroxylverbindungen mit einem Molekulargewicht zwischen 400 und 10 000, vorzugsweise zwischen 600 und 3000, in Frage, z. B. mindestens 2, in der Regel 2 bis 6, vorzugsweise aber 2 bis 4, Hydroxylgruppen aufweisende Polyester, Polyäther, Polythioäther, Polyacetale, Polycarbonate und Polyesteramide, wie sie für die Herstellung von homogenen und von zellförmigen Polyurethanen an sich bekannt sind:

a) Die in Frage kommenden Hydroxylgruppen aufweisenden Polyester sind z. B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können aber die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z. B. durch Halogenatome, substituiert und/oder ungesättigt sein.
Als Beispiele für solche Carbonsäuren und deren Derivate seien genannt:
Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren,

wie Ölsäure; Terephthalsäuredimethylester und Terephthalsäure-bis-glykolester. Als mehrwertige Alkohole kommen z. B. Äthylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethyloläthan, Pentaerythrit, Chinit, Mannit und Sorbit, Formit, Methylglykosid, ferner Diäthylenglykol, Triäthylenglykol, Tetraäthylenglykol und höhere Polyäthylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z. B. ε-Caprolacton, oder aus Hydroxycarbonsäuren, z. B. ω-Hydroxycapronsäure, sind einsetzbar. Ebenso kann erfindungsgemäß auch Rizinusöl als kohärente Phase der Dispersion dienen. Dispersionen in Rizinusöl sind insbesondere zur Herstellung von Polyurethan-Reaktivklebstoffen und Fugenvergußmassen geeignet.

b) Auch die erfindungsgemäß in Frage kommenden, mindestens zwei, in der Regel zwei bis acht, vorzugsweise zwei bis drei, Hydroxylgruppen aufweisenden Polyäther sind solche der an sich bekannten Art und werden z. B. durch Polymerisation von Epoxiden wie Äthylenoxid, Propylenoxid, Butylenoxid, Tetrahydrofuran, Styroloxid oder Epichlorhydrin mit sich selbst, z. B. in Gegenwart von Lewis-Katalysatoren wie $BF_3$, oder durch Anlagerung dieser Epoxide, vorzugsweise von Äthylenoxid und Propylenoxid, gegebenenfalls im Gemisch oder nacheinander, an Startkoponenten mit reaktionsfähigen Wasserstoffatomen wie Wasser, Alkohole, Ammoniak oder Amine, z. B. Äthylenglykol, Propylenglykol-(1,3) oder -(1,2), Trimethylolpropan, Glycerin, Sorbit, 4,4'-Dihydroxy-diphenylpropan, Anilin, Äthanolamin oder Äthylendiamin hergestellt. Auch Sucrosepolyäther, wie sie z. B. in den DE-Auslegeschriften 1 176 358 und 1 064 938 beschrieben werden, sowie auf Formit oder Formose gestartete Polyäther (DE-Offenlegungsschriften 2 639 083 bzw. 2 737 951), kommen erfindungsgemäß in Frage. Vielfach sind solche Polyäther bevorzugt, die überwiegend (bis zu 90 Gew.-%, bezogen auf alle vorhandenen OH-Gruppen im Polyäther) primäre OH-Gruppen aufweisen. Auch OH-Gruppen aufweisende Polybutadiene sind erfindungsgemäß geeignet.

c) Unter den Polythioäthern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten z. B. um Polythiomischäther, Polythioätherester oder Polythioätheresteramide.

d) Als Polyacetale kommen z. B. die aus Glykolen, wie Diäthylenglykol, Triäthylenglykol, 4,4'-Dioxäthoxydiphenyldimethylmethan, Hexandiol und Formaldehyd herstellbaren Verbindungen in Frage. Auch durch Polymerisation cyclischer Acetale wie z. B. Trioxan (DE-Offenlegungsschrift 1 694 128) lassen sich erfindungsgemäß geeignete Polyacetale herstellen.

e) Als Hydroxylgruppen aufweisende Polycarbonate kommen solche der an sich bekannten Art in Betracht, die z. B. durch Umsetzung von Diolen wie Propandiol-(1,3), Butandiol-(1,4) und/oder Hexandiol-(1,6), Diäthylenglykol, Triäthylenglykol, Tetraäthylenglykol oder Thiodiglykol mit Diarylcarbonaten, z. B. Diphenylcarbonat, oder Phosgen hergestellt werden können (DE-Auslegeschriften 1 694 080, 1 915 908 und 2 221 751; DE-Offenlegungsschrift 2 605 024).

f) Zu den Polyesteramiden und Polyamiden zählen z. B. die aus mehrwertigen gesättigten oder ungesättigten Carbonsäuren bzw. deren Anhydriden und mehrwertigen gesättigten oder ungesättigten Aminoalkoholen, Diaminen, Polyaminen und deren Mischungen gewonnen, vorwiegend linearen Kondensate.

g) Auch bereits Urethan- oder Harnstoffgruppen enthaltende Polyhydroxylverbindungen sowie gebenenfalls modifizierte natürliche Polyole, wie Rizinusöl oder Kohlenhydrate, z. B. Stärke, sind verwendbar. Auch Anlagerungsprodukte von Alkylenoxiden an Phenol-Formaldehyd-Harze oder auch an Harnstoff-Formaldehydharze sind erfindungsgemäß einsatzbar.

h) Erfindungsgemäß können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z. B. erhalten, wenn man Polyadditionsreaktionen (z. B. Umsetzungen zwischen Polyisocyanaten und aminofunktionellen Verbindungen) bzw. Polykondensationsreaktionen (z. B. zwischen Formaldehyd und Phenolen und/oder Aminen) in situ in den oben genannten, Hydroxylgruppen aufweisenden Verbindungen ablaufen läßt. Derartige Verfahren sind beispielsweise in den DE-Auslegeschriften 1 168 075 und 1 260 142, sowie den DE-Offenlegungsschriften 2 324 134, 2 423 984, 2 512 385, 2 513 815, 2 550 796, 2 550 797, 2 550 833, 2 550 862, 2 633 293 und 2 639 254 beschrieben. Es ist aber auch möglich, gemäß US-Patentschrift 3 869 413 bzw. DE-Offenlegungsschrift 2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z. B. durch Polymerisation von Styrol und Acrylnitril in Gegenwart von Polyäthern (US-Patentschriften 3 383 351, 3 304 273, 3 523 093, 3 110 695; DE-Auslegeschrift 1 152 536) oder Polycarbonatpolyolen (DE-Patentschrift 1 769 795; US-Patentschrift 3 637 909) erhalten werden, sind für das erfindungsgemäße Verfahren geeignet. Bei Verwendung von Polyätherpolyolen, welche gemäß

den DE-Offenlegungsschriften 2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit. Polyhydroxylverbindungen, in welche durch radikalische Pfropfpolymerisation mittels ungesättigter Carbonsäuren sowie gegebenenfalls weiterer olefinisch ungesättigter Monomerer Carboxylgruppen eingeführt wurden (DE-Offenlegungsschriften 2 714 291, 2 739 620 und 2 654 746) können mit besonderem Vorteil in Kombination mit mineralischen Füllstoffen eingesetzt werden.

Vertreter der genannten erfindungsgemäß zu verwendenden Verbindungen sind z. B. in High Polymers, Vol. XVI, »Polyurethanes, Chemistry and Technology«, verfaßt von Saunders-Frisch, Interscience Publishers, New York, London, Band I, 1962, Seiten 32—42 und Seiten 44—54 und Band II, 1964, Seiten 5—6 und 198—199, sowie im Kunststoff-Handbuch, Band VII, Vieweg-Höchtlen, Carl-Hanser-Verlag, München, 1966, z. B. auf den Seiten 45—71, beschrieben.

Selbstverständlich können Mischungen der obengenannten Verbindungen mit mindestens zwei gegenüber Isocyanaten reaktionsfähigen Wasserstoffatomen mit einem Molekulargewicht von 400—10 000, z. B. Mischungen von Polyäthern und Polyestern, eingesetzt werden.

In speziellen Fällen können den erfindungsgemäßen Dispersionen auch beschränkte Mengen (bis zu 50 Gew.-%, bevorzugt weniger als 30 Gew.-%, bezogen auf gesamte Polyolkomponente) an niedermolekularen, mehrwertigen Alkoholen zugesetzt werden, wie sie weiter unten im Zusammenhang mit der Herstellung von Polyurethankunststoffen als Kettenverlängerungsmittel beschrieben werden. Dies ist insbesondere dann von Interesse, wenn aus den erfindungsgemäßen Dispersionen extrem harte Polyurethan-Formkörper bzw. -überzüge hergestellt werden sollen.

Die Mischungen der Polyolkomponenten sollten, wie im Falle der Verwendung von reinen oder vorreagierten Polyolen als erfindungsgemäße Dispersionsmittel (komponente B), unter 50° C flüssig oder wenigstens wachsartig sein. Nur in seltenen Fällen kann die Verflüssigungstemperatur höher, bis etwa 100° C, liegen.

Die erfindungsgemäßen Dispersionen eignen sich insbesondere als Polyolkomponente für die Herstellung von gegebenenfalls geschäumten Kunststoffen nach dem Polyisocyanat-Polyadditionsverfahren. Es können aus ihnen sowohl homogene als auch zellförmige, sowohl elastische als auch starre Polyurethan-Formkörper und Überzüge, sowie Lacke, Klebstoffe, Fugenvergußmassen und wäßrige Dispersionen mit verbesserten Eigenschaften hergestellt werden. Die Verwendung der erfindungsgemäßen Dispersionen von feindispergiertem TDI-Rückstandspulver in höhermolekularen Polyhydroxylverbindungen bewirkt in den meisten Fällen eine Erhöhung der Härte der Polyurethanendprodukte unter gleichzeitiger sehr starker Erhöhung der Zugfestigkeit, so daß auf die Mitverwendung der üblicherweise eingesetzten niedermolekularen Kettenverlängerungsmittel teilweise oder häufig sogar ganz verzichtet werden kann.

Ein weiterer Vorzug der erfindungsgemäßen Dispersionen ist, daß sie die Brennbarkeit der damit hergestellten Folgeprodukte, z. B. von PUR-Schaumstoffen, reduzieren, Polyester-Polyurethane aus den erfindungsgemäßen Suspensionen sind hydrolysestabiler.

Gegenstand der vorliegenden Erfindung ist somit auch ein Verfahren zur Herstellung von gegebenenfalls zellförmigen Polyurethankunststoffen, die gegebenenfalls ionische Gruppen aufweisen können, durch Umsetzung von

a) Polyisocyanaten mit
b) füllstoffhaltigen Polyhydroxylverbindungen mit einem Molekulargewicht zwischen 400 und 10 000 sowie gegebenenfalls
c) Kettenverlängerungsmitteln mit einem Molekulargewicht zwischen 32 und 400, gegebenenfalls in Gegenwart von
d) Katalysatoren, Treibmitteln und weiteren an sich bekannten Zusatzstoffen,

welches dadurch gekennzeichnet ist, daß als Polyol-Komponente b) die erfindungsgemäßen TDI-Destillationsrückstands-haltigen Dispersionen eingesetzt werden.

Als Polyisocyanatkomponente a) kommen aliphatische, cycloaliphatische, araliphatische, aromatische und heterocyclische Polyisocyanate in Betracht, wie sie z. B. von W. Siefken in Justus Liebig's Annalen der Chemie, 562, Seiten 75 bis 136, beschrieben werden, beispielsweise solche der Formel

$$Q(NCO)_n$$

in der

n = 2—4, vorzugsweise 2, und

Q einen aliphatischen Kohlenwasserstoffrest mit 2—18, vorzugsweise 6—10 C-Atomen, einen cycloaliphatischen Kohlenwasserstoffrest mit 4—15, vorzugsweise 5—10 C-Atomen, einen aromatischen Kohlenwasserstoffrest mit 6—15, vorzugsweise 6—13 C-Atomen, oder einen araliphatischen Kohlenwasserstoffrest mit 8—15, vorzugsweise 8—13 C-Atomen

bedeuten, z. B. Äthylen-diisocyanat, 1,4-Tetramethylen-diisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-Auslegeschritt 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylen-diisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat.

Ferner kommen beispielsweise erfindungsgemäß in Frage: Triphenylmethan-4,4',4''-triisocyanat, Polyphenyl-polymethylenpolyisocyanate, wie sie durch Anilin-Formaldehyd-Kondensation und anschließende Phosgenierung erhalten und z. B. in den GB-Patentschriften 874 430 und 848 671 beschrieben werden, m- und p-Isocyanatophenylsulfonyl-isocyanate gemäß der US-Patentschrift 3 454 606, perchlorierte Arylpolyisocyanate, wie sie z. B. in der DE-Auslegeschrift 1 157 601 (US-Patentschrift 3 277 138) beschrieben werden, Carbodiimidgruppen aufweisende Polyisocyanate, wie sie in der DE-Patentschrift 1 092 007 (US-Patentschrift 3 152 162) sowie in den DE-Offenlegungsschriften 2 504 400, 2 537 685 und 2 552 350 beschrieben werden, Norbornan-Diisocyanate gemäß US-Patentschrift 3 492 330, Allophanatgruppen aufweisende Polyisocyanate, wie sie z. B. in der GB-Patentschrift 994 890, der BE-Patentschrift 761 626 und der NL-Patentanmeldung 7 102 524 beschrieben werden, Isocyanuratgruppen aufweisende Polyisocyanate, wie sie z. B. in der US-Patentschrift 3 001 973, in den DE-Patentschriften 1 022 789, 1 222 067 und 1 027 394 sowie in den DE-Offenlegungsschriften 1 929 034 und 2 004 048 beschrieben werden, Urethangruppen aufweisende Polyisocyanate, wie sie z. B. in der BE-Patentschrift 752 261 oder in den US-Patentschriften 3 394 164 und 3 644 457 beschrieben werden, acylierte Harnstoffgruppen aufweisende Polyisocyanate gemäß der DE-Patentschrift 1 230 778, Biuretgruppen aufweisende Polyisocyanate, wie sie z. B. in den US-Patentschriften 3 124 605, 3 201 372 und 3 124 605 sowie in der GB-Patentschrift 889 050 beschrieben werden, durch Telomerisationsreaktionen hergestellte Polyisocyanate, wie sie z. B. in der US-Patentschrift 3 654 106 beschrieben werden, Estergruppen aufweisende Polyisocyanate, wie sie z. B. in den GB-Patentschriften 965 474 und 1 072 956, in der US-Patentschrift 3 567 763 und in der DE-Patentschrift 1 231 688 genannt werden, Umsetzungsprodukte der obengenannten Isocyanate mit Acetalen gemäß der DE-Patentschrift 1 072 385 und polymere Fettsäureester enthaltende Polyisocyanate gemäß der US-Patentschrift 3 455 883.

Es ist auch möglich, zusätzlich weitere, bei der technischen Isocyanatherstellung anfallende, Isocyanatgruppen aufweisende Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Besonders bevorzugt werden in der Regel die technisch leicht zugänglichen Polyisocyanate, z. B. das 2,4- und 2,6-Toluylendiisocyanat sowie beliebige Gemische dieser Isomeren (»TDI«), Polyphenyl-polymethylen-polyisocyanate, wie sie durch Anilin-Formaldehyd-Kondensation und anschließende Phosgenierung hergestellt werden (»rohes MDI«) und Carbodiimidgruppen, Urethangruppen, Allophanatgruppen, Isocyananuratgruppen, Harnstoffgruppen oder Biuretgruppen aufweisenden Polyisocyanate (»modifizierte Polyisocyanate«), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

Als erfindungsgemäß bei der Herstellung von Polyurethankunststoffen gegebenenfalls mitzuverwendende Ausgangskomponente kommen Verbindungen mit mindestens zwei gegenüber Isocyanaten reaktionsfähigen Wasserstoffatomen und einem Molekulargewicht von 32 bis 400 in Frage. Man versteht hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf.

Auch in diesem Fall können Mischungen von verschiedenen Verbindungen mit mindestens zwei gegenüber Isocyanaten reaktionsfähigen Wasserstoffatomen mit einem Molekulargewicht von 32 bis 400 verwendet werden.

Als Beispiele für derartige Verbindungen seien genannt:

Äthylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Dibrombutendiol (US-Patentschrift 3 723 392), Glyzerin, Trimethylolpropan, Hexantriol-(1,2,6), Trimethyloläthan, Pentaerythrit, Chinit, Mannit und Sorbit, Ricinusöl, Diäthylengylkol, Triäthylenglykol, Tetraäthylenglykol, höhere Polyäthylenglykole mit einem Molekulargewicht bis 400,

Dipropylenglykol, höhere Polypropylenglykole mit einem Molekulargewicht bis 400, Dibutylenglykol, höhere Polybutylenglykole mit einem Molekulargewicht bis 400, 4,4'-Dihydroxy-diphenylpropan, Di-hydroxymethyl-hydrochinon, Äthanolamin, Diäthanolamin, N-Methyldiäthanolamin, Triäthanolamin und 3-Aminopropanol.

Als niedermolekulare Polyole kommen erfindungsgemäß auch die Gemische von Hydroxyaldehyden und Hydroxyketonen (»Formose«) bzw. die hieraus durch Reduktion erhaltenen mehrwertigen Alkohole (»Formit«) in Frage, wie sie bei der Selbstkondensation von Formaldehydhydrat in Gegenwart von Metallverbindungen als Katalysator und von zur Endiolbildung befähigten Verbindungen als Co-Katalysator entstehen (DE-Offenlegungsschriften 2 639 084, 2 714 084, 2 714 104, 2 721 186, 2 738 154 und 2 738 512). Um Kunststoffe mit verbesserter Flammwidrigkeit zu erhalten, setzt man diese Formosen mit Vorteil in Kombination mit Aminoplastbildern und/oder Phosphiten ein (DE-Offenlegungsschriften 2 738 513 und 2 738 532). Auch Lösungen von Polyisocyanatpolyadditionsprodukten, insbesondere von ionische Gruppen aufweisenden Polyurethanharnstoffen und/oder von Polyhydrazodicarbonamiden, in niedermolekularen, mehrwertigen Alkoholen kommen erfindungsgemäß als Polyolkomponente in Betracht (DE-Offenlegungsschrift 2 638 759).

Erfindungsgemäß geeignete aliphatische Diamine sind beispielsweise Äthylendiamin, 1,4-Tetramethylendiamin, 1,11-Undecamethylendiamin, 1,12-Dodecamethylendiamin sowie deren Gemische, 1-Amino-3,3,5-trimethyl-5-amino-methylcyclohexan (»Isophorondiamin«), 2,4- und 2,6-Hexahydrotoluylendiamin sowie deren Gemische, Perhydro-2,4'- und 4,4'-diaminodiphenylmethan, p-Xylylendiamin, Bis-(3-aminopropyl)-methylamin, Diamino-perhydroanthrazene (DE-Offenlegungsschrift 2 638 731) und cycloaliphatische Triamine gemäß DE-Offenlegungsschrift 2 614 244. Auch Hydrazin und substituierte Hydrazine, z. B. Methylhydrazin, N,N'-Dimethylhydrazin und deren Homologe sowie Säuredihydrazide kommen erfindungsgemäß in Betracht, z. B. Carbodihydrazid, Oxalsäuredihydrazid, die Dihydrazide von Malonsäure, Bernsteinsäure, Glutarsäure, Adipinsäure, $\beta$-Methyladipinsäure, Sebazinsäure, Hydracrylsäure und Terephthalsäure; Semicarbazido-alkylen-hydrazide wie z. B. $\beta$-Semicarbazidopropionsäurehydrazid (DE-Offenlegungsschrift 1 770 591), Semicarbazido-alkylencarbazinester wie z. B. 2-Semicarbazidoäthyl-carbazinester (DE-Offenlegungsschrift 1 918 504) oder auch Amino-semicarbazid-Verbindungen wie z. B. $\beta$-Aminoäthyl-semicarbazido-carbonat (DE-Offenlegungsschrift 1 902 931). Zur Steuerung ihrer Reaktivität können die Aminogruppen ganz oder teilweise durch Aldimin- bzw. Ketimin-Gruppen blockiert sein (US-Patentschrift 3 734 894; DE-Offenlegungsschrift 2 637 115).

Als Beispiele für aromatische Diamine seien Bisanthranilsäureester gemäß den DE-Offenlegungsschriften 2 040 644 und 2 160 590, 3,5- und 2,4-Diaminobenzosäureester gemäß DE-Offenlegungsschriften 1 803 635 (US-Patentschriften 3 681 290 und 3 736 350), 2 040 650 und 2 160 589 beschriebenen estergruppenhaltigen Diamine, die Äthergruppen aufweisenden Diamine gemäß DE-Offenlegungsschriften 1 770 525 und 1 809 172 (US-Patentschriften 3 654 364 und 3 736 295), gegebenenfalls in 5-Stellung substituierte 2-Halogen-1,3-Phenylendiamine (DE-Offenlegungsschriften 2 001 772, 2 025 896 und 2 065 869), 3,3'-Dichlor-4,4'-diamino-diphenylmethan, Toluylendiamin, 4,4'-Diaminodiphenylmethan, 4,4'-Diaminodiphenyldisulfide (DE-Offenlegungsschrift 2 404 976), Diaminodiphenyldithioäther (DE-Offenlegungsschrift 2 509 404), durch Alkylthiogruppen substituierte aromatische Diamine (DE-Offenlegungsschrift 2 638 760), Diaminobenzolphosphonsäureester (DE-Offenlegungsschrift 2 459 491), Sulfonat- oder Carboxylatgruppen enthaltende aromatische Diamine (DE-Offenlegungsschrift 2 720 166) sowie die in der DE-Offenlegungsschrift 2 635 400 aufgeführten hochschmelzenden Diamine genannt. Beispiele für aliphatisch-aromatische Diamine sind die Aminoalkylthioaniline gemäß DE-Offenlegungsschrift 2 734 574.

Als Kettenverlängerungsmittel können erfindungsgemäß auch Verbindungen wie 1-Mercapto-3-aminopropan, gegebenenfalls substituierte Aminosäuren, z. B. Glycin, Alanin, Valin, Serin und Lysin sowie gegebenenfalls substituierte Dicarbonsäuren, beispielsweise Bernsteinsäure, Adipinsäure, Phthalsäure, 4-Hydroxyphthalsäure und 4-Aminophthalsäure verwendet werden.

Ferner können gegenüber Isocyanaten monofunktionelle Verbindungen in Anteilen von 0,01 bis 10 Gew.-%, bezogen auf Polyurethanfeststoff, als sogenannte Kettenabbrecher mitverwendet werden. Derartige monofunktionelle Verbindungen sind z. B. Monoamine wie Butyl- und Dibutylamin, Octylamin, Stearylamin, N-Methylstearylamin, Pyrrolidin, Piperidin und Cyclohexylamin, Monoalkohole wie Butanol, 2-Äthylhexanol, Octanol, Dodecanol, die verschiedenen Amylalkohole, Cyclohexanol und Äthylenglykolmonoäthyläther.

Weitere Polyole mit einem Molekulargewicht bis 400, welche erfindungsgemäß gegebenenfalls als Kettenverlängerungsmittel eingesetzt werden können, sind Esterdiole der allgemeinen Formeln

$$HO-(CH_2)_x-CO-O-(CH_2)_y-OH \text{ und}$$
$$HO-(CH_2)_x-O-CO-R-CO-O-(CH_2)_x-OH$$

in denen

R einen Alkylenrest mit 1—10, vorzugsweise 2—6, C-Atomen bzw. einen Cycloalkylen- oder Arylenrest mit 6—10 C-Atomen

x = 2—6 und
y = 3—5

bedeuten,

z. B. δ-Hydroxybutyl-ε-hydroxy-capronsäureester, ω-Hydroxyhexyl-γ-hydroxybuttersäureester, Adipinsäure-bis-(β-hydroxyäthyl)ester und Terephthalsäure-bis(β-hydroxyäthyl)ester;

Diolurethane der allgemeinen Formel

$$HO-(CH_2)_x-O-CO-NH-R'-NH-CO-O-(CH_2)_x-OH$$

in der

R' einen Alkylenrest mit 2—15, vorzugsweise 2—6, C-Atomen oder einen Cycloalkylen- oder Arylenrest mit 6—15 C-Atomen und
x eine Zahl zwischen 2 und 6

darstellen,

z. B. 1,6-Hexamethylen-bis-(β-hydroxyäthylurethan) oder
4,4'-Diphenylmethan-bis-(σ-hydroxybutylurethan);

sowie Diolharnstoffe der allgemeinen Formel

$$HO-(CH_2)_x-\underset{R'''}{\underset{|}{N}}-CO-NH-R''-NH-CO-\underset{R'''}{\underset{|}{N}}-(CH_2)_x-OH$$

in der

R'' einen Alkylenrest mit 2—15, vorzugsweise 2—9, C-Atomen oder einen Cycloalkylen- oder Arylenrest mit 6—15 C-Atomen,
R''' Wasserstoff oder eine Methylgruppe und
x die Zahlen 2 oder 3

bedeuten,

z. B. 4,4'-Diphenylmethan-bis-(β-hydroxyäthylharnstoff) oder die Verbindung

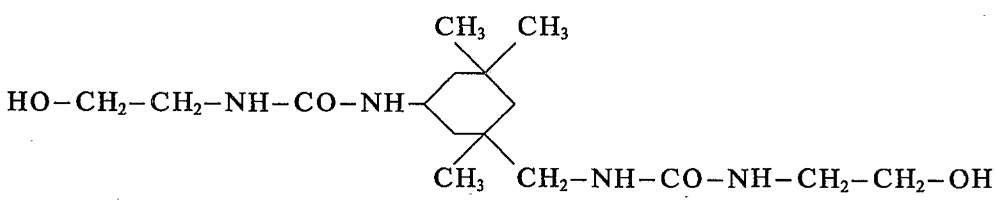

Für manche Fälle ist es vorteilhaft, Polyole einzusetzen, welche Sulfonat- und/oder Phosphonatgruppen enthalten (DE-Offenlegungsschrift 2 719 372), vorzugsweise das Addukt von Bisulfit an Butendiol-1,4 bzw. dessen Alkoxylierungsprodukte.

Als erfindungsgemäß bei der Herstellung von Polyurethankunststoffen gegebenenfalls mitzuverwendende Hilfs- und Zusatzmittel kommen in Betracht:

a) Wasser und/oder leicht flüchtige anorganische oder organische Substanzen als Treibmittel. Als organische Treibmittel kommen z. B. Aceton, Äthylacetat, halogensubstituierte Alkane wie Methylenchlorid, Chloroform, Äthylidenchlorid, Vinylidenchlorid, Monofluortrichlormethan, Chlordifluormethan, Dichlordifluormethan, ferner Butan, Hexan, Heptan oder Diäthyläther, als anorganische Treibmittel z. B. Luft, $CO_2$ oder $N_2O$, in Frage. Eine Treibwirkung kann auch durch Zusatz von bei Temperaturen über Raumtemperatur unter Abspaltung von Gasen, beispielsweise von Stickstoff, sich zersetzenden Verbindungen, z. B. Azoverbindungen wie Azodicarbonamid oder Azoisobuttersäurenitril, erzielt werden. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z. B. auf den Seiten 108 und 109, 453 bis 455 und 507 bis 510 beschrieben.

b) Katalysatoren der an sich bekannten Art, z. B. tertiäre Amine, wie Triäthylamin, Tributylamin, N-Methyl-morpholin, N-Äthyl-morpholin, N,N,N',N'-Tetramethyl-äthylendiamin, Pentamethyldiäthylentriamin und höhere Homologe (DE-Offenlegungsschriften 2 624 527 und 2 624 528), 1,4-Diazobicyclo-(2,2,2)-octan, N-Methyl-N'-dimethylaminoäthylpiperazin, Bis-(dimethylaminoalkyl)-piperazine (DE-Offenlegungsschrift 2 636 787), N,N-Dimethylbenzylamin, N,N-Dimethylcyclohexylamin, N,N-Diäthylbenzylamin, Bis-(N,N-diäthylaminoäthyl)-adipat, N,N,N',N'-Tetramethyl-1,3-butadiamin, N,N-Dimethyl-β-phenyläthylamin, 1,2-Dimethylimidazol, 2-Methylimidazol, monocyclische und bicyclische Amidine (DE-Offenlegungsschrift 1 720 633), Bis-(dialkylamino)alkyl-äther (US-Patentschrift 3 320 782, DE-Auslegeschrift 1 030 558, DE-Offenlegungsschriften 1 804 361 und 2 618 280) sowie Amidgruppen (vorzugsweise Formamidgruppen) aufweisende tertiäre Amine gemäß den DE-Offenlegungsschriften 2 523 633 und 2 732 292). Als Katalysatoren kommen auch an sich bekannte Mannichbasen aus sekundären Aminen, wie Dimethylamin, und Aldehyden, vorzugsweise Formaldehyd, oder Ketonen wie Aceton, Methyläthylketon oder Cyclohexanon und Phenolen, wie Phenol, Nonylphenol oder Bisphenol, in Frage.

Gegenüber Isocyanatgruppen aktive Wasserstoffatome aufweisende tertiäre Amine als Katalysator sind z. B.

Triäthanolamin, Triisopropanolamin, N-Methyl-diäthanolamin, N-Äthyl-diäthanolamin, N,N-Dimethyl-äthanolamin, deren Umsetzungsprodukte mit Alkylenoxiden wie Propylenoxid und/oder Äthylenoxid sowie sekundär-tertiäre Amine gemäß DE-Offenlegungsschrift 2 732 292.

Als Katalysatoren kommen ferner Silaamine mit Kohlenstoff-Silizium-Bindungen, wie sie z. B. in der DE-Patentschrift 1 229 290 (entsprechend der US-Patentschrift 3 620 984) beschrieben sind, in Frage, z. B. 2,2,4-Trimethyl-2-silamorpholin und 1,3-Diäthylaminomethyl-tetramethyl-disiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden (DE-Offenlegungsschrift 1 769 043).

Die Reaktion zwischen NCO-Gruppen und Zerewitinoff-aktiven Wasserstoffatomen wird auch durch Lactame und Azalactame stark beschleunigt, wobei sich zunächst ein Assoziat zwischen dem Lactam und der Verbindung mit acidem Wasserstoff ausbildet. Derartige Assoziate und ihre katalytische Wirkung werden in den DE-Offenlegungsschriften 2 062 288, 2 062 289, 2 117 576 (US-Patentschrift 3 758 444), 2 129 198, 2 330 175 und 2 330 211 beschrieben.

Erfindungsgemäß können auch organische Metallverbindungen, insbesondere organische Zinnverbindungen, als Katalysatoren, verwendet werden. Als organische Zinnverbindungen kommen neben schwefelhaltigen Verbindungen wie Di-n-octyl-zinn-mercaptid (DE-Auslegeschrift 1 769 367; US-Patentschrift 3 645 927) vorzugsweise Zinn(II)-salze von Carbonsäuren wie Zinn(II)-acetat, Zinn(II)-octoat, Zinn(II)-äthylhexoat und Zinn(II)-laurat und die Zinn(IV)-Verbindungen, z. B. Dibutylzinnoxid, Dibutylzinndichlorid, Dibutylzinndiacetat, Dibutylzinndilaurat, Dibutylzinnmaleat oder Dioctylzinndiacetat in Betracht.

Selbstverständlich können alle obengenannten Katalysatoren als Gemische eingesetzt werden. Von besonderem Interesse sind dabei Kombinationen aus organischen Metallverbindungen und Amidinen, Aminopyridinen oder Hydrazinopyridinen (DE-Offenlegungsschriften 2 434 185, 2 601 082 und 2 603 834).

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z. B. auf den Seiten 96 bis 102 beschrieben.

Die Katalysatoren werden in der Regel in einer Menge zwischen etwa 0,001 und 10 Gew.-%, bezogen auf die Gesamtmenge an Verbindungen mit mindestens zwei gegenüber Isocyanaten reaktionsfähigen Wasserstoffatomen, eingesetzt.

c) Oberflächenaktive Zusatzstoffe, wie Emulgatoren und Schaumstabilisatoren. Als Emulgatoren kommen z. B. die Natriumsalze von Ricinusöl-sulfonaten oder Salze von Fettsäuren mit Aminen wie ölsaures Diäthylamin oder stearinsaures Diäthanolamin infrage. Auch Alkali- oder Ammoniumsalze von Sulfonsäuren wie etwa von Dodecylbenzolsulfonsäure oder Dinaphthylmethandisulfonsäure oder von Fettsäuren wie Ricinolsäure oder von polymeren Fettsäuren können als oberflächenaktive Zusatzstoffe mitverwendet werden.

Als Schaumstabilisatoren kommen vor allem Polyäthersiloxane, speziell wasserlösliche Vertreter, infrage. Diese Verbindungen sind im allgemeinen so aufgebaut, daß ein Copolymerisat aus Äthylenoxid und Propylenoxid mit einem Polydimethylsiloxanrest verbunden ist. Derartige Schaumstabilisatoren sind z. B. in den US-Patentschriften 2 834 748, 2 917 480 und 3 629 308 beschrieben. Von besonderem Interesse sind vielfach über Allophanatgruppen verzweigte Polysiloxan-Polyoxyalyklen-Copolymere gemäß DE-Offenlegungsschrift 2 558 523.

d) Reaktionsverzögerer, z. B. sauer reagierender Stoffe wie Salzsäure oder organische Säurehalogenide, ferner Zellregler der an sich bekannten Art wie Paraffine oder Fettalkohole oder Dimethylpolysilxane sowie Pigmente oder Farbstoffe und Flammschutzmittel der an sich bekannten Art, z. B. Tris-chloräthylphosphat, Trikresylphosphat oder Ammoniumphosphat und

-polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z. B. auf den Seiten 103 bis 113 beschrieben.

## Durchführung des erfindungsgemäßen Verfahrens

Die Reaktionskomponenten werden erfindungsgemäß nach dem an sich bekannten Einstufenverfahren, dem Präpolymerverfahren oder dem Semipräpolymerverfahren zur Umsetzung gebracht, wobei man sich oft maschineller Einrichtungen bedient, z. B. solcher, die in der US-Patentschrift 2 764 565 beschrieben werden. Wegen der Instabilität der TDI-Rückstandspulver in Diisocyanaten ist es überraschend, daß die in einem Polyol erfindungsgemäß dispergierten feinstteiligen TDI-Rückstandspulver mit monomeren Diisocyanaten in lagerstabile NCO-Präpolymere überführt werden können. Einzelheiten über Verarbeitungseinrichtungen, die auch erfindungsgemäß infrage kommen, werden im Kunststoff-Handbuch, Band VII, herausgegeben von Vieweg und Höchtlen, Carl-Hanser-Verlag, München 1966, z. B. auf den Seiten 121 bis 205 beschrieben.

Bei der Schaumstoffherstellung kann erfindungsgemäß die Verschäumung auch in geschlossenen Formen durchgeführt werden. Dabei wird das Reaktionsgemisch in eine Form eingetragen. Als Formmaterial kommt Metall, z. B. Aluminium, oder Kunststoff, z. B. Epoxidharz, infrage. In der Form schäumt das schäumfähige Reaktionsgemisch auf und bildet den Formkörper. Die Formverschäumung kann dabei so durchgeführt werden, daß das Formteil an seiner Oberfläche Zellstruktur aufweist, sie kann aber auch so durchgeführt werden, daß das Formteil eine kompakte Haut und einen zelligen Kern aufweist. Erfindungsgemäß kann man in diesem Zusammenhang so vorgehen, daß man in die Form so viel schäumfähiges Reaktionsgemisch einträgt, daß der gebildete Schaumstoff die Form gerade ausfüllt. Man kann aber auch so arbeiten, daß man mehr schäumfähiges Reaktionsgemisch in die Form einträgt, als zur Ausfüllung des Forminneren mit Schaumstoff notwendig ist. Im letztgenannten Fall wird somit unter »overcharging« gearbeitet; eine derartige Verfahrensweise ist z. B. aus den US-Patentschriften 3 178 490 und 3 182 104 bekannt.

Bei der Formverschäumung werden vielfach an sich bekannte »äußere Trennmittel«, wie Siliconöle, mitverwendet. Man kann aber auch sogenannte »innere Trennmittel«, gegebenenfalls im Gemisch mit äußeren Trennmittteln, verwenden, wie sie z. B. aus den DE-Offenlegungsschriften 2 121 670 und 2 307 589 bekanntgeworden sind.

Erfindungsgemäß lassen sich auch kalthärtende Schaumstoffe herstellen (vgl. GB-Patentschrift 1 162 517, DE-Offenlegungsschrift 2 153 086).

Selbstverständlich können aber auch Schaumstoffe durch Blockverschäumung oder nach dem an sich bekannten Doppeltransportbandverfahren hergestellt werden.

Die folgenden Beispiele erläutern die vorliegende Erfindung. Wenn nicht anders vermerkt, sind in den Beispielen Mengenangaben als Gewichtsteile bzw. Gewichtsprozente zu verstehen.

Tabelle 1

Herstellung der in den Patentbeispielen verwendeten TDI-Rückstandspulver aus in inerten Lösungsmitteln unlöslichen Destillationsrückständen, die zwangsweise bei der Produktion von monomerem Toluylendiisocyanat angefallen sind.

Die Rückstände I und II stammen aus der T80-Herstellung, Rückstand III aus der T65-Herstellung.

| Rückstand | NCO-Gehalt % | Zerkleinerungsmaschinen | Zersetzung | Teilchengröße |
|---|---|---|---|---|
| 1 | 2 | 3 | 4 | 5 |
| I | 7,2 | HM + LSM | 270 | 4 |
| II | 8,4 | HM + LSM | 275 | 20 |
| III | 10,9 | HM + LSM | 270 | 25 |

Erläuterungen zu Tabelle 1:

Spalte 3: Art der verwendeten Vor- und Feinstzerkleinerungsmaschine bei der Trockenzerkleinerung
HM = Hammermühle
LSM = Luftstrahlmühle

Spalte 4: Beginn der Zersetzung in °C

Spalte 5: Teilchengröße in µm von ca, 50 Gew.-% des Mahlgutes.

Ein bei der Produktion von Toluylendiisocyanaten im Sumpf verbleibender Phosgenierungsrückstand, (ca. 10 Gew.-Proz. der theoretischen Monomerenausbeute) wird, ca. 150—180°C heiß, sehr zähflüssig in einen Ausrührkessel abgelassen, in dem mindestens die doppelte Menge Wasser vorgelegt wurde. Ein großer Teil der freien Isocyanatgruppen reagiert unter Kohlendioxidabspaltung und Polyharnstoffbildung. Es entsteht bei diesem Denaturierungsprozeß unter starker Erwärmung des Wassers eine grobteilige, sehr unregelmäßig geformte, poröse Rückstandsschlacke, von der man in einer Mulde das Wasser ablaufen läßt, bis der durch Benetzung noch anhaftende Wassergehalt unter 10 Gew.-Proz., vorteilhafter für eine anschließende Vorzerkleinerung in einer Hammermühle unter 5 Gew.-Proz. gesunken ist.

Zur Bestimmung des inkludierten Isocyanatgehaltes muß eine Probe mindestens auf unter 60 µm zerkleinert und in Aceton auf 50°C erhitzt werden. Vergleichsweise wird bei Raumtemperatur nur etwa die Hälfte der freien NCO-Gruppen gefunden. Bei grobkörniger TDI-Rückstandsschlacke ist sogar nur ein Bruchteil davon zu erfassen. Je nach Korngröße nimmt der NCO-Gehalt der mit Wasser benetzten, denaturierten Rückstandsschlacke bei Raumtemperatur innerhalb von Tagen (<500 µm) bis Wochen (>2—3 mm) allmählich ab. Die Verringerung des Gehaltes an freien Isocyanatgruppen wird unterbunden, indem man die auf unter 3 mm Korngröße, beispielsweise in einer Hammermühle, vorzerkleinerte, denaturierte TDI-Rückstandsschlacke bei Temperaturen unter 50°C in einem Umluftschrank trocknet, bis der Wassergehalt zweckmäßig unter 0,2 Gew.-% gesunken ist, und unter Luftabschluß lagert. Die Feinzerkleinerung kann in einer Luftstrommühle erfolgen. Feinstkorngrößen erhält man in einem Durchgang mit Hilfe von Luftstrahlenmühlen.

## Beispiel 1

### TDI-Rückstands-Dispersion in einem verzweigten Polyäther

In einer Rührapparatur werden 150 Gew.-Teile eines auf Trimethylolpropan gestarteten Polyäthers aus Propylenoxid und Äthylenoxid (OH-Zahl=34) mit ca. 80% primären OH-Gruppen und einer Viskosität von 1300 mPas/25°C (Polyäther 1) vorgelegt, 100 Gew.-Teile TDI-Destillationsrückstand I eingerührt und die Suspension erwärmt. Bei 80°C werden weitere 50 Gew.-Teile TDI-Rückstand I zugegeben und unter Rühren die Temperatur zunächst auf 100°C unter Stickstoff gesteigert und nach ca. 2 Stunden, wenn der NCO-Gehalt auf unter 1 Gew.-% gesunken ist, weitere 2 bis 3 Stunden bis 150°C erhitzt. Sobald der NCO-Gehalt weniger als 0,1 Gew.-% beträgt, läßt man abkühlen. Die stabile Dispersion hat 40%ig bei 25°C eine Viskosität von 16 500 mPas, mit Polyäther 1 auf 20% verdünnt von 2300 mPas.

Die in üblicher Weise mit dieser Dispersion hergestellten PUR-Weichschäume sind mit zunehmender Menge sehr feinteiligen TDI-Rückstands in der Stauchhärte und im Brandverhalten verbessert.

## Beispiel 2

### TDI-Destillationsrückstand/Präpolymer-Dispersion

Man stellt mit den gleichen Komponenten und Mengen, wie in Beispiel 1 angegeben, eine 40%ige TDI-Rückstands-Dispersion her, läßt jedoch die Temperatur 80°C nicht überschreiten. Nach ca. 2 Stdn. beträgt der Gehalt an freiem Isocyanat 2,9 Gew.-Proz. Die Viskosität der Dispersion ist gegenüber Beispiel 1 auf die Hälfte erniedrigt: 40%ig bei 25°C 8850 mPas.

Der Isocyanatgehalt ist nach 3 Monaten Lagerung bei 20—30°C völlig unverändert.

Beispiel 3—5

TDI-Rückstands-Dispersionen in einem verzweigten Polyäther

| Rezepturen für Beispiele (in Gew.-Tln.) | | | |
|---|---|---|---|
| 3 | 4 | 5 | |
| 228,5 | 363,6 | 650,0 | eines auf Trimethylolpropan gestarteten Polyäthers (Polyäther 2) aus Propylenoxid und Äthylenoxid (OH-Zahl: 49; ca. 5% primäre OH-Gruppen, Viskosität: 550 mPas) |
| 100,0 | 100,0 | 100,0 | TDI-Rückstand II |
| 30,4 | 21,6 | 13,3 | Feststoffgehalt (Gew.-Proz.) |
| 300 | 50 | 40 | Reaktionszeit (Minuten) |

Der in einer Rührapparatur vorgelegte Polyäther wird auf 140° C erhitzt und die angegebene Menge TDI-Destillationsrückstandspulver zugegeben und so lange bei 135—140° C gerührt, bis der Isocyanatgehalt auf mindestens 0,2 Gew.-Proz. gesunken ist.

Die Viskositäten der stabilen Dispersionen betragen bei 25° C 2300 bzw. 1400 bzw. 890 mPas.

Beispiele 6 und 7

TDI-Destillationsrückstands-Dispersionen in einem linearen Polyäther

Beispiel 6

150,0 Gew.-Teile Polypropylenglykoläther (Polyäther 3) OH-Zahl: 56, Viskosität bei 25° C : 340 mPas
100,0 Gew.-Teile TDI-Rückstand I
0,5 Gew.-Teile einer 20%igen wäßrigen Kaliumhydroxidlösung

werden unter Stickstoff auf 130—140° C in einer Rührapparatur erhitzt und unter reduziertem Druck die geringe Menge Wasser abgezogen. Im Laufe von ca. 4—5 Stdn. sinkt der Gehalt an freiem Isocyanat auf unter 0,4 Gew.-Proz. Mit Polyphosphorsäure wird auf pH 7 eingestellt. Die stabile 40%ige Dispersion hat bei 25° C eine Viskosität von 1.690 mPas.

Beispiel 7

Man verfährt wie in Beispiel 6, verwendet jedoch die 4fache Menge Kaliumhydroxidlösung. Der Restisocyanatgehalt sinkt unter den in Beispiel 6 angewendeten Bedingungen unter 0,1 Gew.-Proz., die Viskosität der stabilen 40%igen Dispersion ist auf 3.725 mPas erhöht.

Beispiel 8

Isocyanat-Präpolymer-Dispersion aus einem unlöslichen TDI-Destillationsrückstand, monomeren TDI- und einem linearen Polyäther

Rezeptur:

206 Gew.-Teile Polyäther 3
100 Gew.-Teile TDI-Rückstand I
37 Gew.-Teile Toluylendiisocyanat (Monomerenverhältnis 2,4-TDI : 2,6 TDI = 80 : 20)

Der Polyäther wird in einer Rührapparatur vorgelegt und unter Stickstoff auf 100° C erhitzt. Dann dispergiert man zunächst den TDI-Rückstand ein und fügt das TDI-Monomerengemisch zu. Die Temperatur wird allmählich auf 135° C gesteigert. Nach ca. 60—80 Minuten beträgt der Gehalt an freiem Isocyanat noch 2,7 Gew.-Proz., der auch nach monatelangem Lagern der Präpolymer-Dispersion bei Ausschluß von Feuchtigkeit konstant bleibt.

Vergleichsversuch

Im Gegensatz dazu ist eine Mischung aus den im Patentbeispiel 8 angegebenen TDI-Rückstands- und Monomerenkomponenten, d. h. ohne Polyäther, bezüglich Isocyanatgehalt instabil, d. h. der Isocyanatgehalt nimmt kontinuierlich (auch bei anderen Mischungsverhältnissen) schon bei ca. 20° C, besonders stark aber bei erhöhter Temperatur, ab.

Beispiele 9—14

TDI-Destillationsrückstands-Additionsreaktionen mit niedermolekularen H-aciden Komponenten in einem höhermolekularen Polyätherpolyol.

Beispiel 9

Rezeptur:

154,0 Gew.-Teile Polyäther 1
100,0 Gew.-Teile TDI-Rückstand I
4,2 Gew.-Teile Hydrazin-Monohydrat

Der Polyäther wird in einer Rührapparatur vorgelegt, unter Stickstoff auf 80° C erwärmt und dabei portionsweise der TDI-Rückstand eingeführt; danach erfolgt sofort die langsame Zugabe des Hydrazin-Monohydrats und Temperatursteigerung auf 100° C. Unter reduziertem Druck wird das Hydratwasser abdestilliert und die Innentemperatur auf 135° C gebracht. Nach 30—60 Minuten ist der Gehalt an freien Isocyanatgruppen bereits auf Null gesunken. (Vergleiche dazu Beispiel 1).

Die abgekühlte, feinteilige, 40%ige, sedimentationsstabile Dispersion hat bei 25° C eine Viskosität von 9.650 mPas. Nach Verdünnung mit Polyäther 1 auf 20% beträgt die Viskosität 1850 mPas/25° C.

Vergleichsversuch

Setzt man anstelle des freie Isocyanatgruppen enthaltenden TDI-Rückstandes die äquivalente Isocyanatmenge in Form von monomeren TDI zu und verfährt im übrigen wie im Beispiel 9 beschrieben, erfolgt nach der Hydrazinzugabe schon innerhalb kurzer Zeit eine schnell voranschreitende Verquallung, so daß das Reaktionsgemisch nicht weiter gerührt werden kann.

Beispiel 10

TDI-Destillationsrückstand-Harnstoff-Dispersion in einem höhermolekularen, linearen Polyester.

Rezeptur:

237 Gew.-Teile eines Polymischesters (Polyester 1) aus 1,6-Hexandiol, 2,2-Dimethylpropandiol-(1,3) im Mol-Verh. 22 : 12 und Adipinsäure (OH-Zahl 62, Säure-Zahl 1)
100 Gew.-Teile TDI-Rückstand I
6 Gew.-Teile einer 25%igen, wäßrigen Ammoniaklösung

In den auf 80° C erwärmten Polyester wird der sehr feinteilige TDI-Rückstand dispergiert und die Ammoniaklösung zudosiert. Danach erhöht man die Innentemperatur allmählich auf 130° C und destilliert unter reduziertem Druck das Wasser ab. Innerhalb einer Stunde wird der Ammoniak an die freien Isocyanatgruppen quantitativ addiert (daneben reagiert auch ein Teil der Hydroxylgruppen des Polyesters), so daß kein freies Isocyanat mehr nachzuweisen ist.

Die so erhaltene, bei 80° C rührbare, stabile Dispersion hat einen Feststoffgehalt von 30 Gew.-% und eignet sich u. a. für die Herstellung einer wäßrigen PUR-Dispersion (Beispiel 10A) für die Leder- oder Textilbeschichtung.

## Beispiel 10A

Wäßrige, anionische PUR-Dispersion aus einer TDI-Destillationsrückstands-Dispersion

Rezeptur:

338,5 Gew.-Teile Dispersion von Patentbeispiel 10
52,2 Gew.-Teile 2,4-/2,6-Toluylendiisocyanat (Monomeren-Verh.: 65 : 35)
52,0 Gew.-Teile einer 45%igen, wäßrigen Lösung eines Diaminsulfonats der Formel:
$H_2N-CH_2-CH_2-NH-CH_2-CH_2-SO_3^{\ominus}Na^{\oplus}$
912,0 Gew.-Teile Aceton
557,4 Gew.-Teile Wasser

Die 90°C warme, wasserfreie Dispersion von Beispiel 10 wird in einer Rührapparatur mit Destillationsaufsatz mit dem TDI-Monomergemisch versetzt und ca. 30 Minuten gerührt, bis der NCO-Gehalt 3,3 Gew.-Prozent beträgt. Dann erfolgt nacheinander die Zugabe von Aceton und der Diaminsulfonatlösung und nach weiteren 15 Minuten von Wasser. Das Lösungsmittel wird quantitativ abdestilliert. Man erhält eine wäßrige PUR-Dispersion, die auf beliebige Unterlagen appliziert werden kann. Rakelt man die Dispersion beispielsweise auf eine Glasplatte und verdunstet das Wasser vollständig bei 90—110°C, erhält man einen homogenen, weichen PUR-Elastomerfilm mit einer Reißfestigkeit von 17 mPas bei einer Reißdehnung von 380%.

## Beispiele 11—14

Modifizierte TDI-Destillationsrückstands-Dispersionen in einem niedermolekularen, verzweigten Polyester und ihre Verwendung als lösungsmittelfreie Klebstoffe und Fugenvergußmassen.

## Beispiel 11

Rezeptur:

150 Gew.-Teile Rizinusöl (OH-Zahl 165), Viskosität bei 25°C = 670 mPas
100 Gew.-Teile TDI-Rückstand I
6 Gew.-Teile einer 25%igen, wäßrigen Ammoniaklösung

werden wie unter Beispiel 10 beschrieben umgesetzt.

Die sedimentationsstabile, NCO-freie, 40%ige Dispersion hat eine Viskosität von 8920 mPas.

## Beispiel 12

Ein in Rizinusöl dispergierter, feinteiliger, durch Polymethylenharnstoffgruppen modifizierter TDI-Rückstand wird wie folgt hergestellt:

Rezeptur:

150 Gew.-Teile TDI-Rückstand I, dessen freie NCO-Gruppen durch Reaktion in Substanz mit einer etwa äquivalenten Menge Ammoniak in Harnstoffgruppen umgewandelt worden sind, suspendiert man in einer Rührapparatur in
618 Gew.-Teile Rizinusöl und fügt
15 Gew.-Teile 30%ige, wäßrige Formalinlösung zu.

Die Dispersion wird mit Schwefelsäure auf pH 2 eingestellt und auf zunächst 80°C und nach 60 Minuten auf 100°C erhitzt und das Wasser abdestilliert. Nach weiteren 150 Minuten wird mit Trinatriumphosphatlösung neutralisiert. Die Viskosität der 20%igen, wasserfreien Dispersion beträgt bei 25°C 4.670 mPas.

### Beispiel 12A

### Lösungsmittelfreie Klebstoff-Formulierungen

100 Gew.-Teile der 20%igen TDI-Rückstands-Dispersion von Beispiel 12 werden bei Raumtemperatur mit 42,6 bzw. 51,1 Gew.-Teilen Polyphenyl-polymethylen-polyisocyanat mit einem NCO-Gehalt von 30 Gew.-Proz. (»rohes MDI«) innig vermischt und innerhalb von 40 Minuten als Reaktionsklebstoff auf nicht vorbehandelte Buchenholz-Probekörper aufgetragen und 24 Stdn. mit einem Druck von 30 bar gepreßt.

Die Klebeigenschaften der erfindungsgemäßen flexiblen Verklebung sind im Vergleich zu einer nur mit Rizinusöl und »rohem MDI« erhaltenen Verklebung hinsichtlich Scherfestigkeit auf das Doppelte bzw. Dreifache und in der Wärmestandfestigkeit bei 50°C auf die 80fache bzw. 110fache Zeit verbessert.

### Beispiel 13

Rezeptur:

161 Gew.-Teile Rizinusöl
100 Gew.-Teile TDI-Rückstand II
5 Gew.-Teile Äthanolamin
3 Gew.-Teile Hydrazin-Monohydrat

Eine Dispersion des TDI-Rückstandes II in Rizinusöl wird vorgelegt und eine Mischung der NH-Verbindungen bei 70 bis 80°C langsam eingerührt. Die freien NCO-Gruppen sind innerhalb einer Stunde vollständig abreagiert.

Die 40%ige, feinteilige Dispersion hat bei 25°C eine Viskosität von 15 910 mPas. Verdünnt man mit Rizinusöl auf 20%, dann sinkt die Viskosität auf 1570 mPas.

### Beispiel 13A

### Klebstoff-Formulierung

Eine analog Beispiel 12A ausgeführte Verklebung mit einer intensiv verrührten Mischung von 100 Gew.-Teilen der 40%igen Dispersion von Beispiel 12 und 32 Gew.-Teilen »rohem MDI« führt gegenüber einer TDI-Rückstandsfreien Vergleichsprobe zu einer 3,5fachen höheren Scherfestigkeit und verbesserten Wärmebestandfestigkeit.

### Beispiel 14

Rezeptur:

150 Gew.-Teile Rizinusöl
100 Gew.-Teile TDI-Rückstand III
2 Gew.-Teile Hydrazin-Monohydrat
50 Gew.-Teile Toluol

Der in einer Mischung von Rizinusöl und Toluol dispergierte TDI-Rückstand III aus einer technischen 2,4-, 2,6-Toluylendiisocyanat-Produktion (Monomeren-Verhältnis 65 : 35) wird bei 90°C mit dem Hydrazin unter Ausbildung von Polyhydrazodicarbonamid-Gruppen umgesetzt. Wenn die freien Isocyanatgruppen nach ca. 50 bis 70 Minuten verbraucht sind, wird unter reduziertem Druck das Toluol vollständig abdestilliert.

Die 40%ige Dispersion hat bei 25°C eine Viskosität von 7950 mPas und eignet sich hervorragend als Fugenvergußmasse. Mit Rizinusöl auf 20% Feststoffgehalt verdünnt, hat die Dispersion eine Viskosität von 1230 mPas.

## Patentansprüche

1. Dispersionen von Destillationsrückständen der TDI-Herstellung, gekennzeichnet durch einen Gehalt von

A) 2 bis 60 Gew.-%, bezogen auf gesamte Dispersion, eines im wesentlichen monomerenfreien, vernetzten, in inerten organischen Lösungsmitteln unlöslichen, nicht unzersetzt schmelzbaren, wasserdenaturierten Destillationsrückstandes der Toluylendiisocyanat-Herstellung mit einem Gehalt von weniger als 15 Gew.-% includierter NCO-Gruppen in feingemahlener Form mit einer mittleren Teilchengröße von weniger als 350 µm und dessen freie Isocyanatgruppen gegebenenfalls durch Umsetzung mit Verbindungen mit aciden Wasserstoffatomen ganz oder teilweise abreagiert wurden, als disperser Phase in
B) Verbindungen mit mindestens 2 aliphatischen Hydroxylgruppen und einem mittleren Molekulargewicht von 400 bis 10 000 als kohärenter Phase.

2. Dispersionen nach Anspruch 1, dadurch gekennzeichnet, daß der Anteil von Komponente A) 5 bis 50 Gew.-%, bezogen auf gesamte Dispersion, beträgt.
3. Dispersionen nach Anspruch 1, dadurch gekennzeichnet, daß Komponente A) zu einer mittleren Teilchengröße von weniger als 25 µm vermahlen ist.
4. Dispersionen nach Anspruch 1, dadurch gekennzeichnet, daß Komponente A) zu einer mittleren Teilchengröße von weniger als 5 µm vermahlen ist.
5. Dispersionen nach Ansprüchen 1 bis 4, dadurch gekennzeichnet, daß Komponente A) durch Reaktion der pulverisierten TDI-Destillationsrückstände mit Ammoniak aminofunktionellen Verbindungen, Alkoholen, Aminoplastbildnern und/oder Aldehyden modifiziert worden ist.
6. Dispersionen nach Ansprüchen 1 bis 5, dadurch gekennzeichnet, daß Komponente a) durch Einführung ungesättigter, copolymerisierbarer Gruppen mittels Reaktion von freien NCO-Gruppen mit einem ungesättigten Alkohol oder einer ungesättigten Carbonsäure oder durch Reaktion von Harnstoffgruppen mit einer ungesättigten Carbonylverbindung modifiziert worden ist.
7. Dispersionen nach Ansprüchen 1 bis 6, dadurch gekennzeichnet, daß die höhermolekularen Polyhydroxylverbindungen der kohärenten Phase B) copolymerisierbare, ungesättigte Gruppen enthalten.
8. Dispersionen nach Ansprüchen 1 bis 7, dadurch gekennzeichnet, daß Komponente B) eine Verbindung mit 2 bis 6 aliphatischen Hydroxylgruppen und einem mittleren Molekulargewicht von 600 bis 3000 ist.
9. Verwendung von TDI-Destillationsrückständen bei der Herstellung von gegebenenfalls zellförmigen Polyurethankunststoffen, die gegebenenfalls ionische Gruppen aufweisen können, aus

a) Polyisocyanaten mit
b) füllstoffhaltigen Polyhydroxyverbindungen mit einem Molekulargewicht zwischen 400 und 10 000 sowie gegebenenfalls
c) Kettenverlängerungsmitteln mit einem Molekulargewicht zwischen 32 und 400, gegebenenfalls in Gegenwart von
d) Katalysatoren, Treibmitteln und weiteren an sich bekannten Zusatzstoffen,

dadurch gekennzeichnet, daß als Polyol-Komponente b) TDI-Destillationsrükstandshaltige Dispersionen gemäß Ansprüchen 1 bis 8 eingesetzt werden.

## Claims

1. Dispersions of distillation residues from the production of TDI, characterised by a content of

A) 2 to 60% by weight, based on the total weight of the dispersion, of a substantially monomer-free, crosslinked distillation residue from the production of toluylene diisocyanate, which distillation residue is insoluble in inert organic solvents, cannot be melted without decomposing, has been denatured with water and has a content of less than 15% by weight of included NCO groups, in a finely ground form with an average particle size of less than 350 m, and the free isocyanate groups of which have optionally been completely or partly reacted with compounds containing acid hydrogen atoms, as the disperse phase, in
B) compounds containing at least 2 aliphatic hydroxyl groups and having an average molecular weight of 400 to 10,000, as coherent phase.

2. Dispersions according to claim 1, characterised in that the proportion of component A) is 5 to 50% by weight, based on the total weight of the dispersion.

3. Dispersions according to claim 1, characterised in that component A) is ground to an average particle size of less than 25 µm.

4. Dispersions according to claim 1, characterised in that component A) is ground to an average particle size of less than 5 µm.

5. Dispersions according to claims 1 to 4, characterised in that component A) has been modified by reaction of the powdered TDI distillation residues with ammonia, aminofunctional compounds, alcohols, aminoplast formers and/or aldehydes.

6. Dispersions according to claims 1 to 5, characterised in that component A) has been modified by the introduction of unsaturated, copolymerizable groups by means of the reaction of free NCO groups with an unsaturated alcohol or with an unsaturated carboxylic, acid, or by the reaction of urea groups with an unsaturated carbonyl compound.

7. Dispersions according to claims 1 to 6, characterised in that the relatively high molecular weight polyhydroxyl compounds of the coherent phase B) contain copolymerizable unsaturated groups.

8. Dispersions according to claims 1 to 7, characterised in that component B) is a compound with 2 to 6 aliphatic hydroxyl groups and an average molecular weight of 600 to 3,000.

9. Use of TDI distillation residues in the production of optionally cellular polyurethane plastics, which may optionally contain ionic groups, from

a) polyisocyanates and
b) filler-containing polyhydroxyl compounds having a molecular weight between 400 and 10,000 and optionally
c) chain extenders having a molecular weight between 32 and 400, optionally in the presence of
d) catalysts, blowing agents and other kown additives,

characterised in that dispersions containing TDI distillation residues according to claim 1 to 8 are used as the polyol component b).

**Revendications**

1. Dispersions de résidus de distillation de la préparation du TDI, caractérisées en ce qu'elles contiennent:

A) de 2 à 60% en poids, par rapport à la dispersion totale, d'un résidu de distillation essentiellement exempt de monomères, réticulé, insoluble dans les solvants organiques inertes, impossible à fondre sans décomposition, dénaturé par l'eau, de la préparation du toluylènediisocyanate, à une teneur inférieure à 15% en poids de groupes NCO inclus, à l'état finement broyé, à une dimension de particule moyenne inférieure à 350 µ et dont les groupes isocyanate libres ont réagi le cas échéant en totalité ou en partie avec des composés à atomes d'hydrogène acides, en tant que phase dispersée, dans
B) des composés contenant au moins 2 groupes hydroxy aliphatiques et présentant un poids moléculaire moyen de 400 à 10 000, en tant que phase cohérente.

2. Dispersions selon la revendication 1, caractérisées en ce que la proportion du composant A) représente de 5 à 50% du poids de la dispersion totale.

3. Dispersions selon la revendication 1, caractérisées en ce que le composant A) est broyé jusqu'à une dimension de particule moyenne inférieure à 25 µ.

4. Dispersions selon la revendication 1, caractérisées en ce que le composant A) est broyé à une dimension de particule moyenne inférieure à 5 µ.

5. Dispersions selon les revendications 1 à 4, caractérisées en ce que le composant A) a été modifié par réaction des résidus de distillation de TDI en poudre avec l'ammoniac, des composés aminofonctionnels, des alcools, des aminoplastogènes et/ou des aldéhydes.

6. Dispersions selon les revendications 1 à 5, caractérisées en ce que le composant A) a été modifié par introduction de groupes insaturés copolymérisables par réaction des groupes NCO libres avec un alcool insaturé ou un acide carboxylique insaturé ou par réaction de groupes urée avec un composé carbonylé insaturé.

7. Dispersions selon les revendications 1 à 6, caractérisées en ce que les composés polyhydroxylés à haut poids moléculaire de la phase cohérente B) contiennent des groupes insaturés copolymérisables.

8. Dispersions selon les revendications 1 à 7, caractérisées en ce que le composant B) est un composé portant de 2 à 6 groupes hydroxy aliphatiques et présentant un poids moléculaire moyen de 600 à 3000.

9. Utilisation de résidus de distillation de la préparation de TDI pour la préparation de matières plastiques en polyuréthanne ayant le cas échéant une structure cellulaire et contenant le cas échéant des groupes ioniques, en faisant réagir

a) des polyisocyanates,
b) des composés polyhydroxylés contenant des charges présentant un poids moléculaire moyen de 400 à 10 000, ainsi que le cas é échéant
c) des composés d'allongement de chaînes presentant un poids moleculaire moyen de 32 à 400 le cas échéant en présence de
d) catalysateurs agents moussants et d'autres additifs connu en soi

caractérisée en ce que les dispersions contenant des residus de distillation selon les revendications 1 à 8 sont utilisées comme composés polyhydroxylés.